(19) Europäisches Patentamt
European Patent Office
Office européen des brevets

(11) EP 4 316 869 A1

(12) EUROPEAN PATENT APPLICATION

(43) Date of publication:
**07.02.2024 Bulletin 2024/06**

(21) Application number: **23183126.4**

(22) Date of filing: **03.07.2023**

(51) International Patent Classification (IPC):
***B60C 1/00*** *(2006.01)* ***C08L 23/22*** *(2006.01)*

(52) Cooperative Patent Classification (CPC):
(C-Sets available)
**C08L 23/22; B60C 1/0016** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 JP 2022122840**

(71) Applicant: **Sumitomo Rubber Industries, Ltd.**
**Kobe-shi, Hyogo 651-0072 (JP)**

(72) Inventor: **ONO, Shuichiro**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) RUBBER COMPOSITION FOR TIRE AND TIRE

(57) It is an object of the present invention is to provide a tire having improved overall performance of on-ice grip performances at the time of the tire being a new article and after deterioration. Provided is a rubber composition for tire, comprising a diene-based rubber component and a filler, wherein the diene-based rubber component consists of a copolymer A having an ethylene unit and a branched conjugated diene unit and other diene-based rubbers, and wherein, when a content of the copolymer A based on 100 parts by mass of the diene-based rubber component in the rubber composition is defined as X, in part(s) by mass, a content of other diene-based rubbers is defined as Y, in part(s) by mass, and a content of the filler is defined as Z, in part(s) by mass, X is 15 or more and 50 or less, Y is 50 or more and 85 or less, Z is 50 or more and 150 or less, and (Y-X)/Z is less than 1.1.

EP 4 316 869 A1

(52) Cooperative Patent Classification (CPC): (Cont.)

C-Sets
**C08L 23/22, C08L 9/00, C08L 47/00, C08K 3/04, C08K 3/34**

**Description**

TECHNICAL FIELD

The present invention relates to a rubber composition for tire and a tire.

BACKGROUND OF THE INVENTION

In recent years, abrasion resistance of a tire has improved, and a period of use in the market has become longer, and therefore, there has been a growing demand for improving various performances of the tire such as wet grip performance and on-ice grip performance even after deterioration of the tire.

JP 2019-99656 A describes a rubber composition for tread that has a low temperature dependence of on-ice performance and an excellent wet grip performance by compounding of an isoprene-based rubber, a terpene-based resin, and a predetermined branched conjugated diene copolymer. However, no consideration is given to on-ice grip performance after deterioration of a tire.

SUMMARY OF THE INVENTION

It is an object of the present invention to provide a tire having improved overall performance of on-ice grip performances at the time of the tire being a new article and after deterioration.

The present invention relates to a rubber composition for tire below:

A rubber composition for tire, comprising a diene-based rubber component and a filler,
wherein the diene-based rubber component consists of a copolymer A having an ethylene unit and a branched conjugated diene unit and other diene-based rubbers, and
wherein, when a content of the copolymer A based on 100 parts by mass of the diene-based rubber component in the rubber composition is defined as X, in part(s) by mass, a content of other diene-based rubbers is defined as Y, in part(s) by mass, and a content of the filler is defined as Z, in part(s) by mass,
X is 15 or more and 50 or less,
Y is 50 or more and 85 or less,
Z is 50 or more and 150 or less, and
(Y-X)/Z is less than 1.1.

According to the present invention, provided is a tire having improved overall performance of on-ice grip performances at the time of the tire being a new article and after deterioration.

BRIEF DESCRIPTION OF THE DRAWINGS

FIG. 1 is a schematic partial cross-sectional view of a tire according to one embodiment of the present invention.
FIG. 2 is an enlarged cross-sectional view showing a part of a tread of the tire according to one embodiment of the present invention.

DETAILED DESCRIPTION

The rubber composition for tire that is one embodiment of the present invention is a rubber composition for tire, comprising a diene-based rubber component and a filler, wherein the diene-based rubber component consists of a copolymer A having an ethylene unit and a branched conjugated diene unit and other diene-based rubbers, and wherein, when a content of the copolymer A based on 100 parts by mass of the diene-based rubber component in the rubber composition is defined as X, in part(s) by mass, a content of other diene-based rubbers is defined as Y, in part(s) by mass, and a content of the filler is defined as Z, in part(s) by mass, X is 15 or more and 50 or less, Y is 50 or more and 85 or less, Z is 50 or more and 150 or less, and (Y-X)/Z is less than 1.1.

A reason why the overall performance of on-ice grip performances at the time of the tire being a new article and after deterioration of the tire having a tire member formed of the rubber composition for tire of the present invention is improved is considered as follows, although the following consideration is not intended to be bound by theory.

That is, (1) the rubber component comprises a copolymer A having an ethylene unit and a branched conjugated diene unit and other diene-based rubbers, thereby improving compatibility of the rubber component and also improving

compatibility with the filler. (2) When the content of the copolymer A based on the diene-based rubber component, the content of the other diene-based rubbers, and the content of the filler are within predetermined ranges, a sea-island structure, in which the filler is defined as a sea, is formed in a rubber phase, and it is considered that cracks are less likely to propagate, so that deterioration of the rubber composition can be suppressed, and (3) that viscoelasticity of the rubber composition increases, improving on-ice grip performance. By cooperation of (1) to (3) described above, it is considered that a remarkable effect of providing a tire having improved overall performance of on-ice grip performances at the time of the tire being a new article and after deterioration is achieved.

The copolymer A is preferably a random copolymer.

Since the random copolymer does not cause crystallization of other diene-based rubbers, it is considered that on-ice performance is improved.

The branched conjugated diene unit in the copolymer A is preferably 10 mol% or more and 30 mol% or less.

When the branched conjugated diene unit in the copolymer A is within the above-described range, it is considered that compatibility with other rubber components and co-crosslinkability with a tire adjacent member are improved.

It is preferable that the branched conjugated diene unit comprises a 3,4 configuration and the 3,4 configuration is 70 mol% or more of the entire branched conjugated diene unit.

When the branched conjugated diene unit comprises a 3,4 configuration and the 3,4 configuration is 70 mol% or more of the entire branched conjugated diene unit, it is considered that a steric effect improves plasticity of a polymer and makes cracks less likely to be generated, improving on-ice grip performance after deterioration.

A glass transition temperature of the copolymer A is preferably - 60°C or higher and -40°C or lower.

When the glass transition temperature of the copolymer A is within the above-described range, it is considered that temperature dependency of on-ice performance is reduced to further improve on-ice grip performance at the time of the tire being a new article.

A weight-average molecular weight of the copolymer A is preferably 10,000 or more.

When the weight-average molecular weight of the copolymer A is 10,000 or more, it is considered that co-crosslinkability and bleed-out resistance are improved, further exhibiting effects of the present invention.

In the rubber composition for tire of the present invention, a tan $\delta$ at 30°C (30°C tan $\delta$) is preferably 0.12 or more.

When the 30°C tan $\delta$ is within the above-described values, it is considered that temperature dependency of on-ice performance is reduced to further improve on-ice grip performance at the time of the tire being a new article.

In the rubber composition for tire of the present invention, a glass transition temperature is preferably -80°C or higher from the viewpoint of the effects of the present invention.

In the rubber composition for tire of the present invention, an elongation at break is preferably 400% or more. When the elongation at break is 400% or more, it is considered that on-ice grip performance after deterioration is further improved.

A thickness t of the tire member formed of the rubber composition for tire of the present invention is preferably 1.0 mm or more.

When the thickness t of the tire member is 1.0 mm or more, it is considered that the effects of the present invention can be further exhibited.

A product ($t \times X$) of the thickness t, in mm, of the tire member and X is preferably 20 or more.

When $t \times X$ is 20 or more, it is considered that the effects of the present invention can be further exhibited.

The tire member formed of the rubber composition for tire of the present invention is preferably a tread and/or a sidewall from the viewpoint of further exhibiting the effects of the present invention.

A groove depth at the deepest part of a circumferential groove provided on the tread of the tire having the tire member formed of the rubber composition for tire of the present invention is preferably 1.0 to 10.0 mm from the viewpoint of further improving on-ice grip performance.

The tread of the tire formed of the rubber composition for tire of the present invention preferably has two or more rubber layers from the viewpoint of further improving the effects of the present invention.

<Definition>

A "standardized rim" is a rim defined for each tire in a standard system including a standard, on which the tire is based, by the standard, i.e., a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

A "standardized internal pressure" is an air pressure defined for each tire in a standard system including a standard on, which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard system, the standardized

internal pressure shall be 250 kPa.

A "standardized state" is a state where the tire is rim-assembled on a standardized rim, a standardized internal pressure is filled, and no load is applied. Besides, in a case of a tire having a size not specified in the above-described standard system, the standardized state is a state where the tire is rim-assembled on the minimum rim, 250 kPa is filled, and no load is applied.

A "standardized load" is a load defined for each tire in a standard system including a standard, on which the tire is based, by the standard, i.e., a "MAXIMUM LOAD CAPACITY" in JATMA, the maximum value described in Table "TIRE LOAD LIMITS AT VARIOUS COLD INFLATION PRESSURES" in TRA, or "LOAD CAPACITY" in ETRTO.

A "tread grounding end" is an outermost grounding position in a tire width direction when a standardized load is applied to a tire in a standardized state and the tire is grounded on a flat surface at a camber angle of 0 degree.

A "land part" refers to a region partitioned by a plurality of circumferential grooves extending continuously to a tread grounding end and in a tire circumferential direction in a tread. For example, when there are two circumferential grooves, the land part is divided into a pair of shoulder land parts and a center land part sandwiched between them.

A "groove depth of a circumferential groove" is calculated by a distance between a tread surface and a deepest part at a groove bottom of a circumferential groove. Besides, when there are a plurality of circumferential grooves, the deepest part at the groove bottom of the circumferential groove is a deepest part at a groove bottom of a circumferential groove having a deepest groove depth among the plurality of circumferential grooves.

A "thickness t of a tire member" refers to a thickness of each member measured in a standardized state, for example, a thickness of each layer of a tread or a thickness of a sidewall.

A "content of a plasticizing agent" also includes an amount of a plasticizing agent in a rubber component extended by the plasticizing agent. Similarly, an "oil content" also includes an amount of oil contained in the oil-extended rubber.

<Measuring method>

A "glass transition temperature of a copolymer" is measured by measurement while raising temperature at a temperature rising rate of 10°C/min using a differential scanning calorimeter (Q200) manufactured by TA Instruments Japan Inc. according to JIS K 7121.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied to a rubber component, a resin component, and the like.

A "30°C tan δ" is a loss tangent measured under a condition of a temperature at 30°C, an initial strain of 5%, a dynamic strain of 1%, a frequency of 10 Hz, and an extension mode, using EPLEXOR series manufactured by gabo Systemtechnik GmbH. A sample for loss tangent measurement is a vulcanized rubber composition of 20 mm in length × 4 mm in width × 1 mm in thickness. When it is cut out from a tread of a tire for preparation, a length direction becomes a tire circumferential direction.

A "glass transition temperature of a rubber composition" is determined as a temperature corresponding to a largest tan δ value (tan δ peak temperature) in a temperature distribution curve of tan δ obtained by measurement, under a condition of a frequency of 10 Hz, an initial strain of 10%, an amplitude of ± 0.5%, and a temperature rising rate at 2°C/min, using a dynamic viscoelasticity measuring device (e.g., EPLEXOR series manufactured by gabo Systemtechnik GmbH). A sample for measuring the glass transition temperature is produced in the same manner as in the case for the 30°C tan δ.

An "elongation at break of a rubber composition" is measured by performing a tensile test under a condition of a tensile speed of 3.3 mm/sec under an atmosphere at 23°C in accordance with JIS K 6251 "Rubber, vulcanized or thermoplastics-Determination of tensile stress-strain properties". When a test piece for measurement is prepared from a tire, a dumbbell-shaped No. 7 test piece having a thickness of 1 mm is prepared so that a tire circumferential direction becomes a longitudinal direction.

A "styrene content" is a value calculated by $^1$H-NMR measurement, and is applied to, for example, a rubber component having a repeating unit derived from styrene such as a SBR and the like. A "vinyl content (1,2-bond butadiene unit amount)" is a value calculated by infrared absorption spectrometry according to JIS K 6239-2: 2017, and is applied to, for example, a rubber component having a repeating unit derived from butadiene such as a SBR, a BR, and the like. A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR and the like.

An "average primary particle size of carbon black" can be calculated by observing carbon black with a transmission or scanning electron microscope, measuring 400 or more primary particles of carbon black observed in the field of view, and averaging them. A "nitrogen adsorption specific surface area ($N_2$SA) of carbon black" is measured according

to JIS K 6217-2: 2017.

An "average primary particle size of silica" can be calculated by observing silica with a transmission or scanning electron microscope, measuring 400 or more primary particles of silica observed in the field of view, and averaging them. A "nitrogen adsorption specific surface area ($N_2SA$) of silica" is measured by the BET method according to ASTM D3037-93.

A "softening point of a resin component" is a temperature at which a sphere drops when the softening point specified in JIS K 6220-1: 2001 is measured with a ring and ball softening point measuring device.

[Tire]

Hereinafter, the tire according to one embodiment of the present invention will be described with reference to the drawings. Besides, embodiments shown below are merely examples, and the tire of the present invention is not limited to the following embodiments.

FIG. 1 illustrate the tire that is one embodiment of the present invention, but the present invention is not limited thereto. FIG. 1 shows a part of a cross section of the tire perpendicular to a circumferential direction. In FIG. 1, a vertical direction is a tire radial direction, a horizontal direction is a tire axial direction, and a direction perpendicular to a paper surface is a tire circumferential direction.

The tire having a tire member formed of the rubber composition of the present invention (hereinafter referred to as the tire of the present invention) comprises a tread 1 extending in a circumferential direction to form an annular shape, a pair of sidewalls 31 arranged on both sides of the tread, a pair of bead parts having a bead core 21, at least one carcass layer 33 moored to the bead core 21, and at least one belt layer 2 arranged on the outer side of the carcass layer 33 in a tire radial direction.

The bead part of the tire of the present invention is located on the inner side of the sidewall 31 in the tire axial direction. The bead part comprises a bead core 21 and a bead apex 22 that extends from the core to the outer side in the tire radial direction. The bead apex 22 is tapered outward in the tire radial direction.

In FIG. 1, the carcass 33 is folded around the bead core 21 from inside to outside in the tire axial direction. Due to this folding, a main part and a folded part are formed on the carcass 33. A strip apex 25 generally extends in the tire radial direction. The strip apex 25 is laminated with the bead apex 22 in the vicinity of the inner end in the tire radial direction. The strip apex 25 is sandwiched between the main part and the folded part of the carcass 33 in the vicinity of the inner end in the tire radial direction.

A thickness St of the sidewall 31 is a distance (mm) from the surface of the sidewall to surface of the carcass 33, measured along a normal line of a tire maximum width position PW of the sidewall 31. In the present invention, the thickness St of the sidewall 31 is preferably 0.5 mm or more, more preferably 0.8 mm or more, further preferably 1.0 mm or more, further preferably 1.3 mm or more, further preferably 1.5 mm or more, particularly preferably 1.7 mm or more. Moreover, the thickness St of the sidewall 31 is preferably 12.0 mm or less, more preferably 11.0 mm or less, further preferably 10.0 mm or less, particularly preferably 8.0 mm or less.

A product ($St \times X$) of the thickness St of the sidewall 31 and the content X of the copolymer A is preferably 15 or more, more preferably 18 or more, further preferably 20 or more, further preferably 22 or more, particularly preferably 25 or more. Moreover, $St \times X$ can be, but not particularly limited to, for example, 100 or less, 80 or less, 60 or less, 50 or less, or the like.

FIG. 2 is a cross-sectional view showing a part of the tread of the tire. In FIG. 2, a vertical direction is a tire radial direction, a horizontal direction is a tire width direction, and a direction perpendicular to a paper surface is a tire circumferential direction.

The tread of the tire of the present invention preferably has circumferential grooves 12 extending continuously in the tire circumferential direction. The circumferential groove 12 may extend linearly along the circumferential direction or may extend in a zigzag shape along the circumferential direction.

A groove depth H at the deepest part of the circumferential groove 12 can be calculated by a distance between an extension line 4 of the land part 3 and an extension line 5 at the deepest part of the groove bottom of the circumferential groove 12. Besides, when there are a plurality of circumferential grooves 12, the groove depth H can be, for example, a distance between the extension line 4 of the land part 3 and the extension line 5 at the deepest part of the groove bottom of the circumferential groove 12 (a circumferential groove 12 on the left side in FIG. 2) having the deepest groove depth among the plurality of circumferential grooves 12.

In the present invention, the groove depth H at the deepest part of the circumferential groove 12 is preferably 0.8 mm or more, more preferably 1.0 mm or more, further preferably 1.2 mm or more, particularly preferably 2.0 mm or more. Moreover, the groove depth H at the deepest part of the circumferential groove 12 is preferably 12.0 mm or less, more preferably 11.0 mm or less, further preferably 10.0 mm or less, further preferably 9.0 mm or less, particularly preferably 8.0 mm or less.

The tread of the tire of the present invention preferably has two or more rubber layers. FIG. 2 shows a first

layer 6 constituting a tread surface, a third layer 8 adjacent to an outer side of a belt in a tire radial direction, and a second layer 7 interposed between the first layer 6 and the third layer 8. The first layer 6 typically corresponds to a cap tread.

In FIG. 2, a double-headed arrow Tt1 is a thickness of the first layer 6, a double-headed arrow Tt2 is a thickness of the second layer 7, and a double-headed arrow Tt3 is a thickness of the third layer 8. In FIG. 2, a middle point of the land part 3 in the tire width direction is shown as a symbol P. A tire center line CL is a straight line (normal line) that passes through the point P and is perpendicular to a plane at this point P. In the present specification, the thicknesses Tt1, Tt2, and Tt3 are measured along the CL drawn from the point P on the tread surface at a position where no grooves exist, in the cross section of FIG. 2.

In the present invention, a total thickness of the treads is, but not particularly limited to, preferably 30 mm or less, more preferably 25 mm or less, further preferably 20 mm or less, particularly preferably 15 mm or less. Moreover, the total thickness of the treads is more preferably 3.0 mm or more, more preferably 5.0 mm or more, further preferably 7.0 mm or more.

In the present invention, the thickness Tt1 of the first layer 6 of the tread is preferably 0.8 mm or more, more preferably 1.0 mm or more, further preferably 1.5 mm or more, particularly preferably 2.0 mm or more, from the viewpoint of the effects of the present invention. Moreover, the thickness Tt1 of the first layer 6 of the tread is, but not particularly limited to, preferably 10.0 mm or less, more preferably 9.0 mm or less, further preferably 8.0 mm or less.

A product ($Tt1 \times X$) of the thickness Tt1 of the first layer 6 of the tread and the content X of the copolymer A is preferably 15 or more, more preferably 18 or more, further preferably 20 or more, further preferably 22 or more, particularly preferably 25 or more. Moreover, $Tt1 \times X$ can be, but not particularly limited to, for example, 100 or less, 80 or less, 60 or less, 50 or less, or the like.

In the present invention, each of the thickness Tt2 of the second layer 7 of the tread and the thickness Tt3 of the third layer of the tread is, but not particularly limited to, preferably 0.8 mm or more, more preferably 1.0 mm or more, further preferably 1.5 mm or more, particularly preferably 2.0 mm or more. Moreover, the thickness of each layer of the tread is, but not particularly limited to, preferably 10.0 mm or less, more preferably 9.0 mm or less, further preferably 8.0 mm or less.

[Rubber composition for tire]

The rubber composition for tire of the present invention comprises a diene-based rubber component and a filler, wherein the diene-based rubber component consists of a copolymer A having an ethylene unit and a branched conjugated diene unit and other diene-based rubbers, and wherein, when a content of the copolymer A based on 100 parts by mass of the diene-based rubber component in the rubber composition is defined as X, in part(s) by mass, a content of other diene-based rubbers is defined as Y, in part(s) by mass, and a content of the filler is defined as Z, in part(s) by mass, X is 15 or more and 50 or less, Y is 50 or more and 85 or less, Z is 50 or more and 150 or less, and $(Y-X)/Z$ is less than 1.1, thereby improving overall performance of on-ice grip performances at the time of the tire being a new article and after deterioration.

The tan $\delta$ at 30°C (30°C tan $\delta$) of the rubber composition for tire of the present invention is preferably 0.10 or more, more preferably 0.12 or more, further preferably 0.15 or more, particularly preferably 0.20 or more, from the viewpoint of the effects of the present invention. Moreover, an upper limit value of the 30°C tan $\delta$ is preferably 0.40 or less, more preferably 0.30 or less, further preferably 0.25 or less, from the viewpoint of suppressing excessive heat generation to improve on-ice performance.

The 30°C tan $\delta$ of the rubber composition can be adjusted by a conventional method in the tire industry. For example, the 30°C tan $\delta$ can be increased by using a rubber component having a high glass transition temperature, increasing an amount of a filler, decreasing a particle size, increasing a resin component as a plasticizing agent component, reducing amounts of sulfur and an accelerator, or the like.

The glass transition temperature of the rubber composition for tire of the present invention is preferably -90°C or higher, more preferably -80°C or higher, further preferably -60°C or higher, particularly preferably -50°C or higher, from the viewpoint of the effect of the present invention. Moreover, an upper limit value of the glass transition temperature of the rubber composition for tire of the present invention is preferably -30°C or lower, more preferably -35°C or lower, further preferably -40°C or lower.

The glass transition temperature of the rubber composition can be adjusted by a conventional method in the tire industry. For example, the glass transition temperature can be increased by using a rubber component having a high glass transition temperature, increasing an amount of a filler, decreasing a particle size, increasing a resin component as a plasticizing agent component, reducing amounts of sulfur and an accelerator, or the like.

The elongation at break of the rubber composition for tire of the present invention is preferably 350% or more, more preferably 400% or more, further preferably 500% or more, particularly preferably 600% or more, from the viewpoint of the effects of the present invention. On the other hand, an upper limit value of the elongation at break can be, but not particularly limited to, for example, 900% or less, 850% or less, or 800% or less.

The elongation at break of the rubber composition can be adjusted according to a compounding amount of a rubber component, a compounding amount of a resin component, a type of the resin component, or the like. For example, the elongation at break can be increased by decreasing a content of an isoprene-based rubber.

[Tire member]

The rubber composition of the present invention is used as a tire member. Examples of the tire member include, but are not limited to, a tread, a sidewall, an inner liner, a carcass, a belt, an insulation, and the like. Among them, a tread and/or a sidewall is preferable, and a tread is more preferable. When the tread has two or more rubber layers, each layer further preferably constitutes a tread surface.

The thickness t of the tire member is preferably 0.8 mm or more, more preferably 1.0 mm or more, further preferably 1.5 mm or more, particularly preferably 2.0 mm or more, from the viewpoint of the effects of the present invention. Moreover, the thickness t of the tire member is preferably 10.0 mm or less, more preferably 9.0 mm or less, further preferably 8.0 mm or less. The thickness t of the tire member is, for example, a tread thickness in a case where the tire member is a tread, a thickness of each layer of the tread such as the thickness Tt1 of the first layer of the tread in a case where the tread has two or more layers, or a thickness St of a sidewall in a case where the tire member is a sidewall. The tire member formed of the rubber composition for tire of the present invention is preferably a tread, more preferably a first layer of the tread in a case where the tread has two or more layers, from the viewpoint of further exhibiting the effects of the present invention. That is, the thickness t of the tire member preferably refers to the thickness Tt1 of the first layer of the tread.

A product ($t \times X$) of the thickness t of the tire member and the content X of the copolymer A is preferably 15 or more, more preferably 18 or more, further preferably 20 or more, further preferably 22 or more, particularly preferably 25 or more. Moreover, the $t \times X$ can be, but not particularly limited to, for example, 100 or less, 80 or less, 60 or less, 50 or less, or the like.

The rubber composition of the present invention can be produced using raw materials which will be described below. The followings are detailed descriptions.

<Rubber component>

The rubber composition of the present invention comprises a diene-based rubber component as a rubber component. The diene-based rubber component consists of a copolymer A having an ethylene unit and a branched conjugated diene unit and other diene-based rubbers. The content of the diene-based rubber in 100% by mass of the rubber component is preferably 70% by mass or more, more preferably 80% by mass or more, further preferably 90% by mass or more, particularly preferably 95% by mass or more. Moreover, the rubber component may be one consisting of a diene-based rubber.

<Copolymer A>

The copolymer A is a copolymer having an ethylene unit and a branched conjugated diene unit and may have other monomer units, preferably a copolymer consisting of an ethylene unit and a branched conjugated diene unit, a terpolymer consisting of an ethylene unit, a branched conjugated diene unit, and other monomer units, or a tetrapolymer consisting of an ethylene unit, a branched conjugated diene unit, and other monomer units. The copolymer A is not particularly limited in arrangement of each unit as long as it is a copolymer having an ethylene unit and a branched conjugated diene unit, and may be a random copolymer obtained by random copolymerization or a block copolymer obtained by block copolymerization, but a random copolymer is preferable. These copolymers A may be used alone, or two or more thereof may be used in combination.

The ethylene unit is a structural unit derived from ethylene in the copolymer A. The ethylene unit may be formed by hydrogenation to a structural unit derived from 1,3-butadiene (butadiene unit).

The branched conjugated diene unit refers to a structural unit derived from a branched conjugated diene compound in the copolymer A.

The branched conjugated diene compound is preferably 1,3-diene represented by the following formula:

$$CH_2=CR-CH=CH_2$$

(wherein R represents a hydrocarbon having 1 to 20 carbon atoms. R is, but not particularly limited to, preferably aliphatic hydrocarbon, preferably hydrocarbon having 3 to 20 carbon atoms, more preferably hydrocarbon having 3 to 15 carbon atoms, further preferably hydrocarbon having 5 to 12 carbon atoms.)

The branched conjugated diene compound is preferably one or more selected from the group consisting of

isoprene, myrcene, and farnesene. Among them, myrcene and/or farnesene is more preferable. Farnesene may be any of α-farnesene and β-farnesene. Besides, α-farnesene and β-farnesene may be used in combination.

The above-described branched conjugated diene may take a 1,2 configuration represented by the following formula (1), a 3,4 configuration of the following formula (2), and a 1,4 configuration represented by the following formula (3). In the present invention, the branched conjugated diene unit of the copolymer A preferably comprises the 3,4 configuration represented by the following formula (2), and the 3,4 configuration is preferably 60 mol% or more, more preferably 65 mol% or more, further preferably 70 mol% or more, particularly preferably 75 mol% or more of the entire branched conjugated diene unit of the copolymer A.

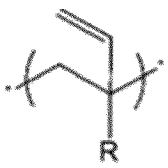
(1)

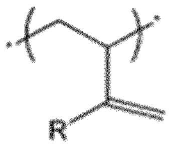
(2)

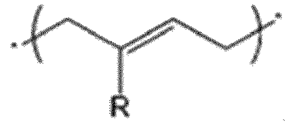
(3)

As the branched conjugated diene, one or more selected from a group consisting of isoprene, myrcene, and farnesene are preferable, myrcene and/or farnesene is more preferable. Farnesene may be either α-farnesene or β-farnesene. Besides, α-farnesene and β-farnesene may be used in combination.

The branched conjugated diene unit in the copolymer A is preferably 8 mol% or more, more preferably 10 mol% or more, further preferably 12 mol% or more, particularly preferably 15 mol% or more, from the viewpoint of improving compatibility with other rubber components and co-crosslinkability with a tire adjacent member. Moreover, the branched conjugated diene unit is preferably 50 mol% or less, more preferably 40 mol% or less, further preferably 30 mol% or less, from the viewpoint of on-ice grip performance after deterioration.

Examples of other monomer units include a butadiene unit, an aromatic vinyl unit, a non-conjugated olefin unit, and the like.

The aromatic vinyl unit refers to a structural unit derived from an aromatic vinyl compound in the copolymer. Here, the aromatic vinyl compound refers to an aromatic compound at least substituted with a vinyl group. Examples of the aromatic vinyl compound include, for example, styrene, α-methylstyrene, 1-vinylnaphthalene, 3-vinyltoluene, ethylvinylbenzene, divinylbenzene, 4-cyclohexylstyrene, 2,4,6-trimethylstyrene, and the like. Among them, styrene is preferable. They may be used alone, or two or more thereof may be used in combination.

The non-conjugated olefin unit refers to a structural unit derived from a non-conjugated olefin compound in the copolymer. Here, the non-conjugated olefin compound refers to a non-conjugated compound having one or more carbon-carbon double bonds, which is an unsaturated aliphatic hydrocarbon. Examples of the non-conjugated olefin compound include, for example, α-olefin such as 1-buten, 1-pentene, 1-hexene, 1-heptene, 1-octene, and the like; a heteroatom-substituted alkene compound such as pivalic acid vinyl, 1-phenylthioethene, N-vinylpyrrolidone, and the like; and the like. Among them, 1-buten is preferable. They may be used alone, or two or more thereof may be used in combination.

The copolymer A can be treated with a modifying agent to obtain a modified product into which a functional group interacting with silica is introduced, if desired. As such a functional group, any of those usually used in this field can be appropriately used, examples of which include, for example, an alkoxysilyl group (e.g., a trimethoxysilyl group, a triethoxysilyl group), and the like. For example, if the copolymer is treated with chlorotriethoxysilane as a modifying agent before it is hydrogenated after synthesis, a modified product into which a triethoxysilyl group is introduced at the active terminal of the copolymer can be obtained.

The glass transition temperature of the copolymer A is preferably - 80°C or higher, more preferably -70°C or higher, further preferably -60°C or higher, particularly preferably -65°C or higher, from the viewpoint of on-ice grip performance. Moreover, the glass transition temperature of the copolymer A is preferably -20°C or lower, more preferably -30°C or lower, further preferably - 40°C or lower, from the viewpoint of flexibility at a low temperature. Besides, the glass transition temperature of the copolymer A is calculated by the above-described measuring method.

The weight-average molecular weight (Mw) of the copolymer A is preferably 10,000 or more, more preferably 12,000 or more, further preferably 15,000 or more, from the viewpoint of wet grip performance. Moreover, it is preferably 2,000,000 or less, more preferably 1,800,000 or less, further preferably 1,500,000 or less, from the viewpoint of crosslinking uniformity. Besides, in the present specification, the weight-average molecular weight of the copolymer A is measured by the above-described measuring method.

The Mw of the copolymer A can be controlled by a conventional method, for example, by adjusting an amount of each monomer added during polymerization with respect to a catalyst. For example, if a total monomer/anion polymerization catalyst ratio or a total monomer/coordination polymerization catalyst ratio is increased, the Mw can be increased, and conversely, if it is decreased, the Mw can be decreased.

The copolymer A can be produced by subjecting each monomer component to a copolymerization reaction such as, for example, anionic polymerization, coordination polymerization, and the like, by a conventional method to form a copolymer. Furthermore, it can be produced by hydrogenating the copolymer to form a hydrogenated product. A hydrogenation reaction of the branched conjugated diene can be performed by a conventional method, and any of catalytic hydrogenation using a metal catalyst, a method using hydrazine, and the like can be appropriately used. For example, catalytic hydrogenation using a metal catalyst can be performed by adding hydrogen under pressure in the presence of the metal catalyst in an organic solvent, and as the organic solvent, any of tetrahydrofuran, methanol, ethanol, and the like can be appropriately used. These organic solvents can be used alone, or two or more thereof can be used in combination. Moreover, as the metal catalyst, for example, any of palladium, platinum, rhodium, ruthenium, nickel, and the like can be appropriately used. These metal catalysts can be used alone, or two or more thereof can be used in combination. A pressure for pressurization is preferably, for example, 1 to 300 $kgf/cm^2$.

Confirmation that the copolymer A has an ethylene unit and a branched conjugated diene unit can be performed by using a technique such as gel permeation chromatography (GPC), $^1$H-NMR, $^{13}$C-NMR, and the like. Moreover, presence of a unit derived from each monomer component can be confirmed based on $^1$H-NMR spectrum or $^{13}$C-NMR spectrum.

The copolymerization reaction is not particularly limited in an order of copolymerization as long as each monomer component is copolymerized. For example, all monomers may be randomly copolymerized at once, certain monomers may be copolymerized in advance, and then the remaining monomers may be added for copolymerization, or each of certain monomers may be copolymerized in advance and subjected to block copolymerization, but in the present invention, random copolymerization is preferably performed. A polymerization method is also not particularly limited, and any of a solution polymerization method, an emulsion polymerization method, a vapor phase polymerization method, a bulk polymerization method, and the like can be used. Among them, a solution polymerization method is preferable. Moreover, the polymerization method may be of either a batch type or a continuous type.

In the rubber composition of the present invention, the content X (part by mass) of the copolymer A based on 100 parts by mass of the diene-based rubber component is 15 or more, preferably 17 or more, more preferably 18 or more, and further preferably 20 or more. Moreover, the content X (part by mass) of the copolymer A based on 100 parts by mass of the diene-based rubber component is 50 or less, preferably 45 or less, more preferably 40 or less, further preferably 35 or less, and particularly preferably 30 or less.

<Other diene-based rubbers>

Examples of other diene-based rubbers include, for example, an isoprene-based rubber (IR), a butadiene rubber (BR), a styrene-butadiene rubber (SBR), a chloroprene rubber (CR), an acrylonitrile-butadiene rubber (NBR), and the like. These other diene-based rubbers may be used alone, or two or more thereof may be used in combination.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in 100% by mass of the diene-based rubber component is preferably 60% by mass or less, more preferably 50% by mass or less, further preferably 40% by mass or less, particularly preferably 35% by mass or less, from the viewpoint of wet grip performance. On the other hand, a lower limit value of the content can be, but not particularly limited to, for example, 5% by mass or more, 10% by mass or more, 15% by mass or more, or 20% by mass or more.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available from Zeon Corporation, Ube Industries, Ltd.,

JSR Corporation, etc. can be used. When the high cis BR is compounded, low temperature characteristics and abrasion resistance can be improved. The cis content is preferably 95 mol% or more, more preferably 96 mol% or more, further preferably 97 mol% or more, particularly preferably 98 mol% or more. Besides, the cis content is measured by the above-described measuring method.

As a modified BR, a modified butadiene rubber (a modified BR) modified at its terminal and/or main chain with a functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated by the above-described measuring method.

A content of the BR in 100% by mass of the diene-based rubber component is preferably 80% by mass or less, more preferably 75% by mass or less, further preferably 70% by mass or less, particularly preferably 65% by mass or less, from the viewpoint of wet grip performance. Moreover, a lower limit value of the content can be, but not particularly limited to, for example, 10% by mass or more, 20% by mass or more, 30% by mass or more, or 40% by mass or more.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable from the viewpoint that they can well improve fuel efficiency and abrasion resistance. These SBRs may be used alone, or two or more thereof may be used in combination.

A content of the SBR in 100% by mass of the diene-based rubber component can be, for example, 1% by mass or more, 3% by mass or more, 5% by mass or more, or 10% by mass or more. On the other hand, the content of the SBR in the diene-based rubber component is preferably 45% by mass or less, more preferably 40% by mass or less, further preferably 30% by mass or less, particularly preferably 20% by mass or less.

A content Y (part by mass) of the other diene-based rubbers based on 100 parts by mass of the diene-based rubber component is 50 or more, preferably 60 or more, more preferably 65 or more, further preferably 70 or more, particularly preferably 75 or more. Moreover, the content Y (part by mass) of the other diene-based rubbers based on 100 parts by mass of the diene-based rubber component is 85 or less, preferably 84 or less, further preferably 82 or less, particularly preferably 81 or less.

(Other rubber components)

The rubber component may comprise rubber components other than diene-based rubbers as long as they do not affect the effects of the present invention. As other rubber components, cross-linkable rubber components commonly used in the tire industry can be used, examples of which include, for example, a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination.

<Filler>

The rubber composition according to the present invention comprises a filler. The rubber composition comprises, as the filler, preferably carbon black and/or silica, more preferably silica, further preferably carbon black and silica.

(Carbon black)

Carbon black is not particularly limited, and, for example, those commonly used in the tire industry such as GPF, FEF, HAF, ISAF, SAF, and the like can be used. Besides, in addition to carbon black produced by burning general mineral oil, carbon black using biomass materials such as lignin may be used. These carbon black may be used alone, or two or more thereof may be used in combination.

A $N_2SA$ of carbon black is preferably 90 $m^2/g$ or more, more preferably 100 $m^2/g$ or more, further preferably

110 $m^2/g$ or more, particularly preferably 120 $m^2/g$ or more, from the viewpoint of reinforcing property. Moreover, it is preferably 200 $m^2/g$ or less, more preferably 180 $m^2/g$ or less, further preferably 160 $m^2/g$ or less, from the viewpoints of fuel efficiency and processability. Besides, the $N_2SA$ of carbon black is measured by the above-described measuring method.

An average primary particle size of carbon black is preferably 18 nm or more, more preferably 20 nm or more, further preferably 21 nm or more, from the viewpoint of processability. Moreover, the average primary particle size is preferably 40 nm or less, more preferably 30 nm or less, further preferably 26 nm or less, from the viewpoint of abrasion resistance.

A content of carbon black based on 100 parts by mass of the rubber component in the rubber composition of the present invention is preferably 1 part by mass or more, more preferably 3 parts by mass or more, further preferably 5 parts by mass or more, from the viewpoints of abrasion resistance and wet grip performance. Moreover, it is preferably 50 parts by mass or less, more preferably 40 parts by mass or less, further preferably 30 parts by mass or less, particularly preferably 20 parts by mass or less, from the viewpoint of fuel efficiency.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Besides, in addition to the above-described silica, silica made of a biomass material such as rice husks may be appropriately used. These silica may be used alone, or two or more thereof may be used in combination.

A $N_2SA$ of silica is preferably 100 $m^2/g$ or more, more preferably 140 $m^2/g$ or more, further preferably 160 $m^2/g$ or more, particularly preferably 180 $m^2/g$ or more, from the viewpoints of reinforcing property and energy loss. On the other hand, it is preferably 350 $m^2/g$ or less, more preferably 300 $m^2/g$ or less, further preferably 250 $m^2/g$ or less, from the viewpoint of dispersibility. Besides, the $N_2SA$ of silica is measured by the above-described measuring method.

An average primary particle size of silica is preferably 22 nm or less, more preferably 20 nm or less, further preferably 18 nm or less, particularly preferably 17 nm or less, from the viewpoint of processability. On the other hand, it is preferably 1 nm or more, more preferably 3 nm or more, further preferably 5 nm or more, from the viewpoint of dispersibility. Besides, the average primary particle size of silica is measured by the above-described measuring method.

A content of silica based on 100 parts by mass of the rubber component in the rubber composition of the present invention is preferably 40 parts by mass or more, more preferably 50 parts by mass or more, further preferably 55 parts by mass or more, particularly preferably 60 parts by mass or more, from the viewpoint of processability. Moreover, it is preferably 150 parts by mass or less, more preferably 140 parts by mass or less, further preferably 130 parts by mass or less, from the viewpoint of abrasion resistance.

A content Z (part by mass) of the filler based on 100 parts by mass of the diene-based rubber component is 50 or more, preferably 55 or more, more preferably 60 or more, further preferably 65 or more, further preferably 70 or more, particularly preferably 75 or more. Moreover, the content Z (part by mass) of the filler based on 100 parts by mass of the diene-based rubber component is 150 or less, preferably 145 or less, more preferably 140 or less, further preferably 135 or less, further preferably 130 or less, further preferably 125 or less, further preferably 120 or less, particularly preferably 110 or less.

In the rubber composition of the present invention, (Y-X)/Z is less than 1.1, preferably less than 1.03, more preferably less than 1.00, further preferably less than 0.95, further preferably less than 0.90, particularly preferably less than 0.85. A lower limit value of (Y-X)/Z is preferably 0 or more, more preferably greater than 0.10, further preferably greater than 0.30, particularly preferably greater than 0.50, from the viewpoint of the effects of the present invention.

(Other fillers)

As fillers, other fillers may further be used in addition to carbon black and silica. Such filler is not particularly limited, and any filler commonly used in this field such as, for example, aluminum hydroxide, alumina (aluminum oxide), calcium carbonate, magnesium sulfate, talc, clay, and the like can be used. In addition to these fillers, a biochar (BIOCHAR) may be appropriately used. These fillers may be used alone, or two or more thereof may be used in combination.

(Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like;

sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, sulfide-based silane coupling agents and/or mercapto-based silane coupling agents are preferably compounded. As the silane coupling agent, for example, those commercially available from Momentive Performance Materials, etc. can be used. These silane coupling agents may be used alone, or two or more thereof may be used in combination.

A total content of silane coupling agents when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

A content of the silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

(Other compounding agents)

The rubber composition according to the present invention can appropriately comprise compounding agents conventionally and generally used in the tire industry, for example, a plasticizing agent, wax, processing aid, stearic acid, zinc oxide, an antioxidant, a vulcanizing agent, a vulcanization accelerator, and the like, in addition to the above-described components.

(Plasticizing agent)

The rubber composition according to the present invention preferably comprises a plasticizing agent. Examples of the plasticizing agent include, for example, a resin component, oil, a liquid rubber, and the like.

The resin component is not particularly limited, examples of which include a petroleum resin, a terpene-based resin, a rosin-based resin, a phenol-based resin, and the like, which are commonly used in the tire industry, and the resin component may be one obtained by hydrogenating them. These resin components may be used alone, or two or more thereof may be used in combination.

Examples of the petroleum resin include a C5--based petroleum resin, an aromatic-based petroleum resin, a C5-C9-based petroleum resin, and the like.

In the present specification, the "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a cyclopentadiene-based resin is appropriately used. Examples of the cyclopentadiene-based resin include a dicyclopentadiene resin (DCPD resin), a cyclopentadiene resin, a methylcyclopentadiene resin (non-hydrogenated cyclopentadiene-based resin), and those obtained by hydrogenating these cyclopentadiene-based resins (hydrogenated cyclopentadiene-based resins). As the cyclopentadiene-based resins, for example, those commercially available from ExxonMobil Chemical, etc. can be used.

In the present specification, an "aromatic petroleum resin" refers to a resin obtained by polymerizing a C9 fraction, and may be hydrogenated or modified. Examples of the C9 fraction include, for example, a petroleum fraction having 8 to 10 carbon atoms such as vinyltoluene, alkylstyrene, indene, methyl indene, and the like. As specific examples of the aromatic petroleum resin, for example, a coumarone indene resin, a coumarone resin, an indene resin, and an aromatic vinyl-based resin are appropriately used.

As the aromatic vinyl-based resin, a homopolymer of α-methylstyrene derivative or styrene derivative, or a copolymer of α-methylstyrene derivative and styrene derivative and/or indene is preferable, from the reasons that they are economical, easy to process, and excellent in heat generation. Besides, the above-described "α-methylstyrene derivative" means an α-methylstyrene compound even if a benzene ring is substituted therein (preferably, an α-methylstyrene compound in which a benzene ring may be substituted with a saturated hydrocarbon group having 1 to 4 carbon atoms), and the above-described "styrene derivative" means a styrene compound even if a benzene ring is substituted therein (preferably, a styrene compound in which a benzene ring may be substituted with a saturated hydrocarbon group having 1 to 4 carbon atoms). As the above-described aromatic vinyl-based resin, for example, those commercially available from Mitsui Chemicals, Inc., Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Group Co., Ltd, etc. can be appropriately used.

Examples of the terpene-based resin include a polyterpene resin consisting of at least one selected from terpene compounds such as α-pinene, β-pinene, limonene, a dipentene, and the like; an aromatic-modified terpene resin made from a terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenol resin include, for example, phenol, bisphenol A, cresol, xylenol, and the like. As the terpene-based resin, for example, those commercially available from Yasuhara Chemical Co., Ltd., etc. can be used.

Examples of the rosin-based resin include, but not particularly limited to, for example, a natural resin rosin, a modified rosin resin, and the like. As the rosin-based resin, for example, those commercially available from Arakawa Chemical Industries, Ltd., Harima Chemicals Group, Inc., etc. can be used.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

As the resin component, one or more selected from a group consisting of a petroleum resin and a terpene-based resin are preferable, and one or more selected from a group consisting of a cyclopentadiene-based resin, an aromatic vinyl-based resin, and a terpene-based resin are more preferable.

A content of the resin component when compounded based on 100 parts by mass of the rubber component is preferably 1 part by mass or more, more preferably 3 parts by mass or more, further preferably 5 parts by mass or more. Moreover, the content of the resin component is preferably 60 parts by mass or less, more preferably 50 parts by mass or less, further preferably 40 parts by mass or less, particularly preferably 30 parts by mass or less.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like. Moreover, from the viewpoint of life cycle assessment, those obtained by purifying a waste oil after being used in a rubber mixer or an engines, or a waste cooking oil used in a restaurant may be used.

A content of oil when compounded based on 100 parts by mass of the rubber component is preferably 1 part by mass or more, more preferably 3 parts by mass or more, further preferably 6 parts by mass or more, particularly preferably 9 parts by mass or more, from the viewpoint of processability. Moreover, it is preferably 120 parts by mass or less, more preferably 100 parts by mass or less, further preferably 80 parts by mass or less, from the viewpoint of abrasion resistance.

A content of the plasticizing agent based on 100 parts by mass of the rubber component (a total amount of a plurality of plasticizing agents when used in combination) in the rubber composition of the present invention is preferably 5 parts by mass or more, more preferably 10 parts by mass or more, further preferably 15 parts by mass or more, further preferably 18 parts by mass or more, particularly preferably 25 parts by mass or more. Moreover, the content is preferably 100 parts by mass or less, more preferably 90 parts by mass or less, further preferably 80 parts by mass or less, particularly preferably 70 parts by mass or less.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass

or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like, and quinoline-based antioxidants such as 2,2,4-trimethyl-1,2-dihydroquinoline polymer, 6-ethoxy-2,2,4-trimethyl-1,2-dihydroquinoline, and the like. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component (a total amount of a plurality of vulcanization accelerators when used in combination) is preferably 1.0 part by mass or more, more preferably 2.0 parts by mass or more, further preferably 2.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

<Production>

The rubber composition according to the present invention can be produced by a known method. For example, it can be produced by kneading each of the above-described components using a rubber kneading apparatus such as an open roll, a closed type kneader, and the like (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire of the present invention can be produced by a usual method. That is, the tire can be produced by extruding an unvulcanized rubber composition corresponding to each rubber layer, obtained by the above-described method, into a shape of each layer with an extruder equipped with a mouthpiece having a predetermined shape, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

<Application>

The tire of the present invention can be appropriately used as a tire for a passenger car, a tire for a truck/bus, a motorcycle tire, or a racing tire. Among them, it is preferably used as a tire for a passenger car. Besides, the tire for a passenger car is a tire on the premise that it is mounted on a car running on four wheels and refers to one having a maximum load capacity of 1000 kg or less. Moreover, the tire of the present invention can be used as an all-season tire, a summer tire, or a winter tire such as a studless tire and the like.

EXAMPLE

Results are shown in Tables 1 to 3, which are calculated based on evaluation methods described below, reviewing a tire comprising a tread produced using a rubber composition obtained by changing compounding using various chemicals shown below.

NR: TSR20
BR: Ubepol BR (Registered Trademark) 150B manufactured by Ube Industries, Ltd. (cis content: 97 mol%, Mw: 440,000)
Copolymer A1: Copolymer produced in Production example 1 which will be described later (ethylene-myrcene copolymer, Mw: 120,000, Tg: -45°C)
Copolymer A2: Copolymer produced in Production example 2 which will be described later (ethylene-farnesene copolymer, Mw: 120,000, Tg: -45°C)
Carbon black: DIABLACK (N220) manufactured by Mitsubishi Chemical Corporation ($N_2SA$: 114 $m^2/g$, average primary particle size: 22 nm)
Silica: ULTRASIL VN3 manufactured by Evonik Degussa GmbH ($N_2SA$: 175 $m^2/g$, average primary particle size: 17 nm)
Silane coupling agent: Si266 manufactured by Evonik Degussa GmbH (bis(3-triethoxysilylpropyl)disulfide)
Oil: VivaTec 400 manufactured by H&R Group (TDAE oil)
Resin component: Sylvatraxx 4401 manufactured by Kraton Corporation (copolymer of $\alpha$-methylstyrene and styrene)
Wax: OZOACE 0355 manufactured by Nippon Seiro Co., Ltd.
Antioxidant: Antigen 6C manufactured by Sumitomo Chemical Co., Ltd. (N-(1,3-dimethylbutyl)-N'-phenyl-p-phenylenediamine)
Zinc oxide: Zinc oxide No. 1 manufactured by Mitsui Mining & Smelting Co., Ltd.
Stearic acid: Bead stearic acid "CAMELLIA" manufactured by NOF CORPORATION
Sulfur: HK-200-5 manufactured by Hosoi Chemical Industry Co., Ltd. (5% oil-containing powdered sulfur)
Vulcanization accelerator: Nocceler CZ manufactured by Ouchi Shinko Chemical Industry Co., Ltd. (N-cyclohexyl-2-benzothiazolylsulfenamide (CBS))

Production example 1: Production of copolymer A1

A cocatalyst, butyloctylmagnesium, and metallocene are added to a reactor comprising methylcyclohexane and stirred to be alkylated. At this time, a concentration of the catalyst is adjusted so as to adapt target molecular weight, Tg, etc. of the copolymer A1. Next, ethylene and myrcene are continuously added in a weight ratio of 3:1 to carry out a polymerization reaction, and then the polymerization reaction is stopped by cooling, degassing, and adding of ethanol. An antioxidant is added to a polymer solution produced by the polymerization reaction and dried in an oven under vacuum to obtain a copolymer A1.

Production example 2: Production of copolymer A2

A cocatalyst, butyloctylmagnesium, and metallocene are added to a reactor comprising methylcyclohexane and stirred to be alkylated. At this time, a concentration of the catalyst is adjusted so as to adapt target molecular weight, Tg, etc. of the copolymer A2. Next, ethylene and farnesene are continuously added in a weight ratio of 3:1 to carry out a polymerization reaction, and then the polymerization reaction is stopped by cooling, degassing, and adding of ethanol. An antioxidant is added to a polymer solution produced by the polymerization reaction and dried in an oven under vacuum to obtain a copolymer A2.

(Examples and Comparative examples)

According to the compounding formulations shown in Tables 1 and 2, using a 1.7 L closed Banbury mixer, all chemicals other than sulfur and vulcanization accelerators are kneaded until reaching a discharge temperature at 150°C to 160°C for 1 to 10 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a first layer of a tread and attached together with other tire members to prepare an unvulcanized tire. That is, each of unvulcanized rubber compositions for a first layer of a tread as obtained above is molded into a shape of a first layer of a tread, attached together with a second layer of a tread as obtained according to the compounding formulations shown in Table 3, and further attached together with other tire members to prepare an unvulcanized tire, which is then press-vulcanized at 170°C for 12 minutes to obtain a test tire. The thickness t of the member is the thickness of the first layer of the tread.

<Measurement of glass transition temperature (Tg)>

or each unvulcanized rubber test piece produced by being cut out with length 20 mm × width 4 mm × thickness 1 mm from a first layer of a tread of a test tire so that a tire circumferential direction is on a long side, a temperature distribution curve of a loss tangent tan δ is measured under a condition of a frequency of 10 Hz, an initial strain of 10%, an amplitude of ± 0.5%, and a temperature rising rate of 2°C/min, using a dynamic viscoelasticity measuring device (EPLEXOR series manufactured by gabo Systemtechnik GmbH), and a temperature corresponding to the largest tan δ value in the obtained temperature distribution curve (tan δ peak temperature) is defined as a glass transition temperature (Tg). Besides, a thickness direction of a sample is defined as a tire radial direction.

<Measurement of 30 tan δ>

For each unvulcanized rubber test piece produced by being cut out with length 20 mm × width 4 mm × thickness 1 mm from a first layer of a tread of each test tire so that a tire circumferential direction is on a long side, using the dynamic viscoelasticity measuring device (EPLEXOR series manufactured by gabo Systemtechnik GmbH), a loss tangent (tan δ) is measured under a condition of a temperature at 30°C, an initial strain of 5%, a dynamic strain of 1%, a frequency of 10 Hz, and an extension mode.

<Elongation at break>

A dumbbell-shaped No. 7 test piece with a thickness of 1 mm is prepared from a first layer of a tread of each test tire so that a tire circumferential direction becomes a longitudinal direction, and according to JIS K 6251 "Rubber, vulcanized or thermoplastics-Determination of tensile stress-strain properties", a tensile test is performed under a condition of a tensile speed of 3.3 mm/sec in an atmosphere of 23°C to measure an elongation at break (EB) (%).

<On-ice grip performance index at the time of the tire being a new article>

Each test tire is mounted on four wheels of an FF passenger vehicle with a displacement of 2000 cc, respectively, and a braking distance from a point where a brake is applied at a speed of 15 km/h on an ice road surface is measured. On-ice grip performance of each tire is indicated as an index with a braking distance of a control tire (Comparative example 5) being as 100, according to the following equation. The results show that the larger the index is, the more excellent the on-ice grip performance is.

$$\text{(On-ice grip performance index)} = \text{(braking distance of control tire)} / \text{(braking distance of each test tire)} \times 100$$

<On-ice grip performance index after deterioration>

After thermally deteriorating the above-described tire at 80°C for 7 days, a tread is worn along a tread radius so that a thickness of the tread becomes 50% of that at the time of the tire being a new article. Each test tire is mounted on four wheels of an FF passenger vehicle with a displacement of 2000 cc, respectively, and a braking distance from a point where a brake is applied at a speed of 15 km/h on an ice road surface is measured. In addition, on-ice grip performance of each tire is indicated as an index with a braking distance of a control tire (Comparative example 2) being as 100, according to the following equation. The results show that the larger the index is, the more excellent the on-ice grip performance is.

$$\text{(On-ice grip performance index)} = \text{(braking distance of control tire)} / \text{(braking distance of each test tire)} \times 100$$

<Overall performance>

A sum of on-ice grip performance at the time of the tire being a new article and grip performance after deterioration is indicated as an overall performance index. The results show that the larger the index is, the more the overall performance at the time of the tire being a new article and after deterioration (after abrasion) is improved.

Table 1

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| NR | 20 | 30 | 20 | 35 | 20 | 20 | 20 | 20 | 20 | 20 |
| BR | 60 | 50 | 60 | 50 | 50 | 60 | 60 | 60 | 60 | 60 |
| Copolymer A1 | 20 | 20 | 20 | 15 | 30 | 20 | 20 | 20 | 20 | - |
| Copolymer A2 | - | - | - | - | - | - | - | - | - | 20 |
| Carbon black | 10 | 10 | 10 | 10 | 10 | 10 | 10 | 10 | 10 | 10 |
| Silica | 65 | 65 | 60 | 65 | 65 | 65 | 65 | 65 | 65 | 65 |
| Silane coupling agent | 6.5 | 6.5 | 6.0 | 6.5 | 6.5 | 6.5 | 6.5 | 6.5 | 6.5 | 6.5 |
| Oil | 40 | 40 | 40 | 40 | 40 | 60 | 40 | 40 | 40 | 40 |
| Resin component | 15 | 15 | 15 | 15 | 15 | 15 | 20 | 15 | 15 | 15 |
| Wax | 2.0 | 2.0 | 2.0 | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 | 1.0 | 1.0 | 1.0 |
| Vulcanization accelerator | 2.0 | 2.0 | 2.0 | 2.0 | 2.0 | 2.0 | 2.0 | 2.0 | 2.0 | 2.0 |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| (Y-X)/Z | 0.80 | 0.80 | 0.857 | 0.93 | 0.53 | 0.80 | 0.80 | 0.80 | 0.80 | 0.80 |
| Physical property | | | | | | | | | | |
| Glass transition temperature (°C) | -50 | -45 | -50 | -43 | -48 | -50 | -50 | -50 | -50 | -50 |
| 30°C tan δ | 0.20 | 0.22 | 0.19 | 0.23 | 0.20 | 0.20 | 0.24 | 0.21 | 0.21 | 0.20 |
| Elongation at break (%) | 700 | 723 | 698 | 749 | 705 | 820 | 712 | 712 | 712 | 709 |
| Tire | | | | | | | | | | |
| Groove depth H at the deepest part of a circumferential groove provided in the tread (mm) | 2.0 | 2.0 | 2.0 | 2.0 | 2.0 | 2.0 | 2.0 | 1.5 | 2.0 | 2.0 |
| T×X | 40 | 40 | 40 | 30 | 60 | 40 | 40 | 30 | 40 | 40 |
| Total thickness of the tread (mm) | 8.0 | 8.0 | 8.0 | 8.0 | 8.0 | 8.0 | 8.0 | 8.0 | 8.0 | 8.0 |
| Index | | | | | | | | | | |
| On-ice grip performance at time of tire being new article | 107 | 112 | 110 | 109 | 108 | 113 | 114 | 110 | 107 | 108 |
| On-ice grip performance after deterioration | 108 | 110 | 108 | 107 | 109 | 114 | 111 | 109 | 104 | 106 |
| Overall performance | 215 | 222 | 218 | 216 | 217 | 227 | 225 | 219 | 211 | 214 |

Table 2

| | Comparative example | | | | | | |
|---|---|---|---|---|---|---|---|
| | 1 | 2 | 3 | 4 | 5 | 6 | 7 |
| Compounding amount (part by mass) | | | | | | | |
| NR | 40 | 30 | 40 | 30 | 30 | 30 | 20 |
| BR | 60 | 60 | 60 | 60 | 60 | 55 | 50 |
| Copolymer A1 | - | 10 | - | 10 | 10 | 15 | 30 |
| Copolymer A2 | - | - | - | - | - | - | - |
| Carbon black | 10 | 10 | 10 | 10 | 10 | 10 | 10 |
| Silica | 65 | 60 | 90 | 60 | 65 | 50 | 35 |
| Silane coupling agent | 6.5 | 6.0 | 9.0 | 6.0 | 6.5 | 5.0 | 3.5 |
| Oil | 40 | 40 | 60 | 40 | 40 | 40 | 40 |
| Resin component | 15 | 15 | 15 | 15 | 15 | 15 | 15 |
| Wax | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 |
| Vulcanization accelerator | 2.0 | 2.0 | 2.0 | 2.0 | 2.0 | 2.0 | 2.0 |
| (Y-X)/Z | 1.33 | 1.14 | 1.00 | 1.14 | 1.07 | 1.17 | 0.89 |
| Physical property | | | | | | | |
| Glass transition temperature (°C) | -50 | -50 | -50 | -30 | -30 | -45 | -48 |

(continued)

| | Comparative example | | | | | | |
|---|---|---|---|---|---|---|---|
| | 1 | 2 | 3 | 4 | 5 | 6 | 7 |
| 30°C tan δ | 0.20 | 0.19 | 0.29 | 0.19 | 0.20 | 0.16 | 0.13 |
| Elongation at break (%) | 650 | 603 | 765 | 592 | 673 | 543 | 512 |
| Tire | | | | | | | |
| Thickness t of member (mm) | 2.0 | 2.0 | 2.0 | 2.0 | 2.0 | 2.0 | 2.0 |
| T×X | 0 | 20 | 0 | 20 | 20 | 30 | 60 |
| Groove depth H at the deepest part of a circumferential groove provided in the tread (mm) | 8.0 | 8.0 | 8.0 | 8.0 | 8.0 | 8.0 | 8.0 |
| Index | | | | | | | |
| On-ice grip performance at time of tire being new article | 96 | 96 | 99 | 99 | 100 | 95 | 91 |
| On-ice grip performance after deterioration | 99 | 100 | 98 | 96 | 97 | 96 | 94 |
| Overall performance | 195 | 196 | 197 | 195 | 197 | 191 | 185 |

Table 3

| | Second layer |
|---|---|
| Compounding amount (part by mass) | |
| NR | 80 |
| BR | 20 |
| Carbon black | 60 |
| Antioxidant | 1.5 |
| Zinc oxide | 3.5 |
| Stearic acid | 2.0 |
| Sulfur | 2.5 |
| Vulcanization accelerator | 1.5 |
| (Y-X)/Z | 1.67 |

<Embodiments>

Examples of embodiments of the present invention are shown below.

[1] A rubber composition for tire, comprising a diene-based rubber component and a filler,

wherein the diene-based rubber component consists of a copolymer A having an ethylene unit and a branched conjugated diene unit and other diene-based rubbers, and
wherein, when a content of the copolymer A based on 100 parts by mass of the diene-based rubber component in the rubber composition is defined as X, in part(s) by mass, a content of other diene-based rubbers is defined as Y, in part(s) by mass, and a content of the filler is defined as Z, in part(s) by mass,
X is 15 or more and 50 or less, preferably 15 or more and 40 or less, more preferably 15 or more and 30 or less,
Y is 50 or more and 85 or less, preferably 60 or more and 85 or less, more preferably 70 or more and 85 or less,
Z is 50 or more and 150 or less, preferably 60 or more and 120 or less, more preferably 65 or more and 100 or less, and
(Y-X)/Z is less than 1.1, preferably less than 0.95, more preferably less than 0.90.

[2] The rubber composition for tire of [1] above, wherein the copolymer A is a random copolymer.
[3] The rubber composition for tire of [1] or [2] above, wherein the branched conjugated diene unit in the copolymer

A is 10 mol% or more and 30 mol% or less.
[4] The rubber composition for tire of any one of [1] to [3] above, wherein the branched conjugated diene unit comprises a 3,4 configuration and the 3,4 configuration is 70 mol% or more of the entire branched conjugated diene unit.
[5] The rubber composition for tire of any one of [1] to [4] above, wherein a glass transition temperature of the copolymer A is -60°C or higher and -40°C or lower.
[6] The rubber composition for tire of any one of [1] to [5] above, wherein a weight-average molecular weight of the copolymer A is 10,000 or more, preferably 50,000 or more, more preferably 100,000 or more, further preferably 110,000 or more.
[7] The rubber composition for tire of any one of [1] to [6] above, wherein a tan $\delta$ at 30°C is 0.12 or more, preferably 0.15 or more, more preferably 0.20 or more.
[8] The rubber composition for tire of any one of [1] to [7] above, wherein a glass transition temperature is -80°C or higher, preferably -60°C or higher, more preferably -50°C or higher.
[9] The rubber composition for tire of any one of [1] to [8] above, wherein an elongation at break is 400% or more, preferably 500% or more, more preferably 600% or more, further preferably 700% or more.
[10] A tire having a tire member formed of the rubber composition for tire of any one of [1] to [9] above.
[11] The tire of [10] above, wherein a thickness t of the tire member is 1 mm or more, preferably 1.5 mm or more, more preferably 2.0mm or more.
[12] The tire of [10] or [11] above, wherein a product of the thickness t, in mm, of the tire member and X is 20 or more, preferably 30 or more, more preferably 40 or more.
[13] The tire of any one of [10] to [12] above, wherein the tire member is a tread and/or a sidewall.
[14] The tire of any one of [10] to [13] above, wherein a groove depth at the deepest part of a circumferential groove provided in the tread is 1.0 to 10.0 mm.
[15] The tire of any one of [10] to [14] above, wherein the tread has two or more rubber layers.

REFERENCE SIGNS LIST

1. Tread
2. Belt
3. Land part
4. Line segment connecting ends of tread surface
5. Straight line parallel to line segment 4 and passing through deepest part of groove bottom of circumferential groove
6. First layer
7. Second layer
8. Third layer
10. Tread surface
12. Circumferential groove
21. Bead core
22. Bead apex
25. Strip apex
31. Sidewall
32. Inner liner
33. Carcass

CL. Tire center line
PW. Normal line at tire maximum width position
St. Thickness of sidewall
Tt1. Thickness of first layer of tread
Tt2. Thickness of second layer of tread
Tt3. Thickness of third layer of tread
H. The groove depth at the deepest part of the circumferential groove

## Claims

**1.** A rubber composition for tire, comprising a diene-based rubber component and a filler,

wherein the diene-based rubber component consists of a copolymer A having an ethylene unit and a branched conjugated diene unit and other diene-based rubbers, and
wherein, when a content of the copolymer A based on 100 parts by mass of the diene-based rubber component in the rubber composition is defined as X, in part(s) by mass, a content of other diene-based rubbers is defined as Y, in part(s) by mass, and a content of the filler is defined as Z, in part(s) by mass,
X is 15 or more and 50 or less, preferably 15 or more and 40 or less, more preferably 15 or more and 30 or less,
Y is 50 or more and 85 or less, preferably 60 or more and 85 or less, more preferably 70 or more and 85 or less,
Z is 50 or more and 150 or less, preferably 60 or more and 120 or less, more preferably 65 or more and 100 or less, and
(Y-X)/Z is less than 1.1, preferably less than 0.95, more preferably less than 0.90.

**2.** The rubber composition for tire of claim 1, wherein the copolymer A is a random copolymer.

**3.** The rubber composition for tire of claim 1 or 2, wherein the branched conjugated diene unit in the copolymer A is 10 mol% or more and 30 mol% or less.

**4.** The rubber composition for tire of any one of claims 1 to 3, wherein the branched conjugated diene unit comprises a 3,4 configuration and the 3,4 configuration is 70 mol% or more of the entire branched conjugated diene unit.

**5.** The rubber composition for tire of any one of claims 1 to 4, wherein a glass transition temperature of the copolymer A is -60°C or higher and -40°C or lower.

**6.** The rubber composition for tire of any one of claims 1 to 5, wherein a weight-average molecular weight of the copolymer A is 10,000 or more, preferably 50,000 or more, more preferably 100,000 or more, further preferably 110,000 or more.

**7.** The rubber composition for tire of any one of claims 1 to 6, wherein a tan δ at 30°C is 0.12 or more, preferably 0.15 or more, more preferably 0.20 or more.

**8.** The rubber composition for tire of any one of claims 1 to 7, a glass transition temperature is -80°C or higher, preferably -60°C or higher, more preferably -50°C or higher.

**9.** The rubber composition for tire of any one of claims 1 to 8, wherein an elongation at break is 400% or more, preferably 500% or more, more preferably 600% or more, further preferably 700% or more.

**10.** A tire having a tire member formed of the rubber composition for tire of any one of claims 1 to 9.

**11.** The tire of claim 10, wherein a thickness t of the tire member is 1 mm or more, preferably 1.5 mm or more, more preferably 2.0mm or more.

**12.** The tire of claim 10 or 11, wherein a product of the thickness t, in mm, of the tire member and X is 20 or more, preferably 30 or more, more preferably 40 or more.

**13.** The tire of any one of claims 10 to 12, wherein the tire member is a tread and/or a sidewall.

**14.** The tire of any one of claims 10 to 13, wherein a groove depth at the deepest part of a circumferential groove provided in the tread is 1.0 to 10.0 mm.

**15.** The tire of any one of claims 10 to 14, wherein the tread has two or more rubber layers.

FIG. 1

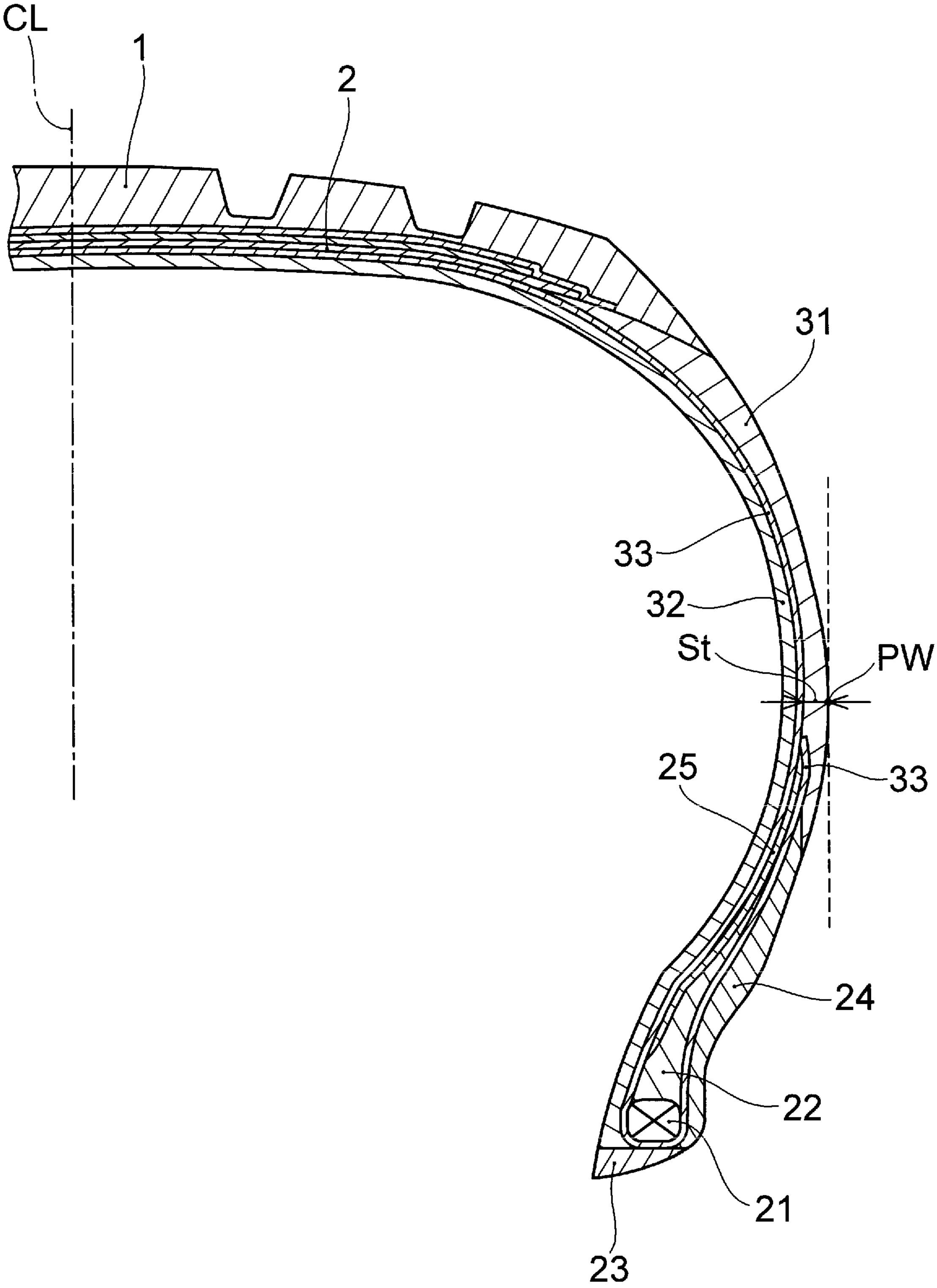

FIG. 2

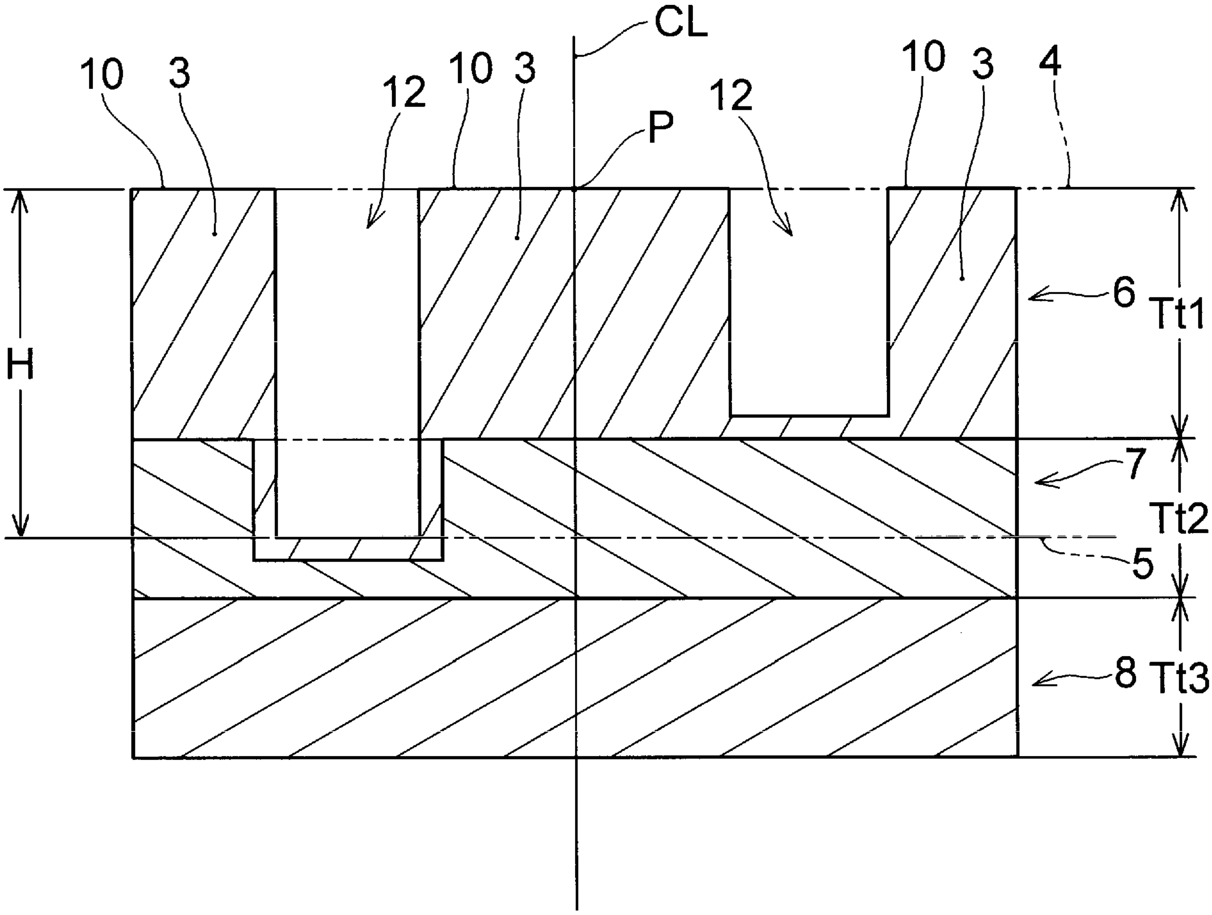

Europäisches Patentamt
European Patent Office
Office européen des brevets

# EUROPEAN SEARCH REPORT

Application Number
EP 23 18 3126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 104 596 A1 (MICHELIN & CIE [FR]) 18 June 2021 (2021-06-18) | 1 | INV. B60C1/00 C08L23/22 |
| A | * examples C1,5; table 5 * | 2-15 | |
| A | EP 2 762 524 A1 (KURARAY CO [JP]; AMYRIS INC [US]) 6 August 2014 (2014-08-06) * example 6 * | 1-15 | |
| X | EP 2 783 880 A1 (SUMITOMO RUBBER IND [JP]) 1 October 2014 (2014-10-01) | 1 | |
| A | * examples 1-6, 13-35 * | 2-15 | |

TECHNICAL FIELDS SEARCHED (IPC)

B60C
C08L

The present search report has been drawn up for all claims

2

| Place of search | Date of completion of the search | Examiner |
|---|---|---|
| Munich | 8 December 2023 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 18 3126

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2023

| Patent document cited in search report | Publication date | Patent family member(s) | Publication date |
|---|---|---|---|
| FR 3104596 A1 | 18-06-2021 | CN 114829156 A | 29-07-2022 |
| | | EP 4076984 A1 | 26-10-2022 |
| | | FR 3104596 A1 | 18-06-2021 |
| | | US 2023059504 A1 | 23-02-2023 |
| | | WO 2021123568 A1 | 24-06-2021 |
| EP 2762524 A1 | 06-08-2014 | BR 112014007430 A2 | 04-04-2017 |
| | | CA 2837547 A1 | 04-04-2013 |
| | | CN 103748159 A | 23-04-2014 |
| | | CN 105646956 A | 08-06-2016 |
| | | EP 2762524 A1 | 06-08-2014 |
| | | ES 2597039 T3 | 13-01-2017 |
| | | JP 5314812 B1 | 16-10-2013 |
| | | JP 2013209673 A | 10-10-2013 |
| | | JP WO2013047348 A1 | 26-03-2015 |
| | | KR 20130143142 A | 30-12-2013 |
| | | PT 2762524 T | 14-12-2016 |
| | | RU 2014112226 A | 10-11-2015 |
| | | TW 201317292 A | 01-05-2013 |
| | | US 2014155536 A1 | 05-06-2014 |
| | | WO 2013047348 A1 | 04-04-2013 |
| EP 2783880 A1 | 01-10-2014 | CN 104072825 A | 01-10-2014 |
| | | EP 2783880 A1 | 01-10-2014 |
| | | US 2014296373 A1 | 02-10-2014 |
| | | US 2018044509 A1 | 15-02-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019099656 A